# EUROPEAN PATENT SPECIFICATION

(11) **EP 0 400 825 B1**
(45) Date of publication and mention of the grant of the patent: **03.01.1996**
(21) Application number: 90305000.3
(22) Date of filing: 09.05.1990
(51) Int. Cl.: G11B 15/675

(54) **Cassette loading apparatus**
Kassettenladegerät
Appareil de chargement de cassette

(30) Priority: 31.05.1989 JP 137683/89
(43) Date of publication of application: 05.12.1990
(73) Proprietor: SONY CORPORATION, Tokyo 141 (JP)
(72) Inventor: Aizawa, Hidekuni, c/o Patents Division, Shinagawa-ku, Tokyo 141 (JP)
(74) Representative: Thomas, Christopher Hugo

(56) References cited:
- EP-A- 0 190 044
- EP-A- 0 215 663
- FR-A- 2 540 661
- GB-A- 2 156 141
- GB-A- 2 210 495

## Description

This invention relates to cassette loading apparatus according to the preamble of Claim 1 and as known from EP-A-0 215 663. Such apparatus is particularly, but not exclusively, adapted for use with a front-loading type video tape recorder (VTR).

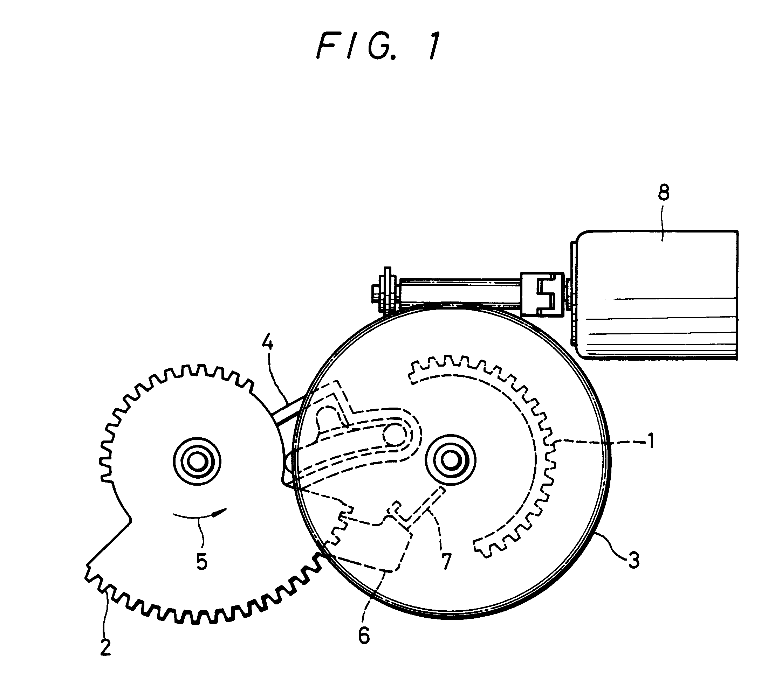

Our Japanese patent application No. 62/78746 describes a cassette holder locking mechanism for locking a cassette holder when it is moved to the loading position in a front-loading type VTR. Figure 1 is a pictorial representation of such a locking mechanism.

As shown in Figure 1, this cassette holder locking mechanism comprises a drive gear 1 and a follower gear 2, each of which is a so-called segment gear. The drive gear 1 is provided at an outer peripheral portion thereof with a worm gear 3 that is driven by a motor 8, whereas the follower gear 2 is provided with a drive arm 4 that moves a pin arranged at the side walls of a cassette holder (not shown). When the drive gear 1 is driven by the motor 8 through the worm gear 3, the follower gear 2 is driven by the drive gear segment 1, so that the drive arm 4 pushes the pin of the cassette holder, whereby the cassette holder is moved to a predetermined loading position.

In the arrangement of the elements shown in Figure 1, the cassette holder is also locked by the above-described drive mechanism by using a protrusion 6 provided on the follower gear 2 that is received by a guide rib 7 provided on the drive gear 1. More specifically, the cassette holder is held by this locking mechanism when the follower gear 2 produces a rotational force in the direction shown by an arrow 5, and this rotational force is received by the guide rib 7 of the drive gear 1 through the protrusion 6. Then, the rotational force of the follower gear 2 is received by the drive gear 1 via the protrusion 6 and the guide rib 7, whereby the follower gear 2 is prevented from being rotated.

This locking mechanism has the following problems. In the initial stage, where the tape cassette is moved to the loading position, when the tape cassette is loaded on the cassette holder, the drive gear 1 and the follower gear 2 are driven while being meshed with each other. However, if the drive gear 1 and the follower gear 2 are disengaged from each other and cannot be meshed with each other, then the protrusion 6 is pushed by the guide rib 7 of the drive gear 1, thereby effecting the locked state shown in Figure 1. When the gear pair formed of the drive gear 1 and the follower gear 2 are not meshed with each other, the two gears 1 and 2 are free to have independent, random rotation, so that when the gears 1 and 2 become meshed again they will be at positions other than the correct position.

Further, if the tape cassette has been loaded in the cassette compartment and the power switch is turned OFF, then it is frequently the case that the tape cassette is ejected because the locked condition has not yet been effected. Furthermore, the locked condition depends on the design or accuracy of cams in the locking portion, so that satisfactory efficiency of the locking mechanism cannot be maintained without difficulty.

European Patent Application EP-A-0215663 described a cassette loading mechanism having a gear train in which a locking pin on one gear engages a cam on another gear such that further rotation of the gear train is prevented when a loaded position is reached.

The invention aims to provide a more reliable and robust cassette loading mechanism.

According to the present invention there is provided a cassette loading apparatus in which a tape cassette holder is moved by a drive source through a gear train to locate a tape cassette in a predetermined loading position, the apparatus comprising:
a pair of gears arranged in mutual engagement forming a part of the gear train, at least one gear of said pair of gears being formed as a geneva stop gear;
a locking member attached to one gear of said pair of gears; and
a cam formed on the other gear of said pair of gears, said cam being arranged for engagement with said locking member, wherein when said cassette holder is moved to a loading position, said locking member is jammed against said cam, thereby locking the cassette holder,
wherein said cam has a predetermined length so that whilst said pair of gears are in engagement with each other, said locking member is restricted by said cam,

characterised in that whilst said pair of gears are disengaged from each other by said geneva stop gear, a rotational ratio substantially equal to the gear ratio of said pair of gears is applied to said pair of gears by said cam and said locking member.

Using a cam to drive the final portion of the motion provides a more robust mechanism at the time when loads tend to fluctuate and arranging the cam to drive with the same rotational ratio provides a smooth transition from gear drive to cam drive.

An embodiment of cassette loading apparatus according to the present invention has a cassette holder for loading thereon a tape cassette that is moved by a drive source through a gear train, thereby to move the tape cassette to a predetermined loading position, and comprising a pair of gears in engagement with each other in the gear train, at least one of the pair of gears being formed as a geneva stop gear, a locking member being provided on one of the pair of gears, and a cam formed on the other gear. The cam is in engagement with the locking member and has an increased length, so that when the pair of gears are in engagement with each other, the locking member is restricted by the cam. Furthermore, when the pair of gears are disengaged from each other by the geneva stop gear, a rotational ratio substantially equal to a gear ratio of the pair of gears is applied to the pair of gears by the cam and the locking member, wherein when the cassette holder is moved to a loading position, the locking member comes into contact with the cam, thereby locking the cassette holder.

The invention will now be described by way of example with reference to the accompanying drawings, throughout which like parts are referred to by like references, and in which:
Figure 1 is an elevational view of a portion of a previously proposed cassette holder locking mechanism;
Figure 2 is an elevational view of a drive portion of an embodiment of cassette loading apparatus according to the present invention;
Figure 3 is a plan view of a cassette holder;
Figure 4 is an exploded perspective view of the apparatus of Figure 3; and
Figures 5 to 8 are elevational views of part of the drive portion of the cassette loading apparatus showing sequential operational states thereof.

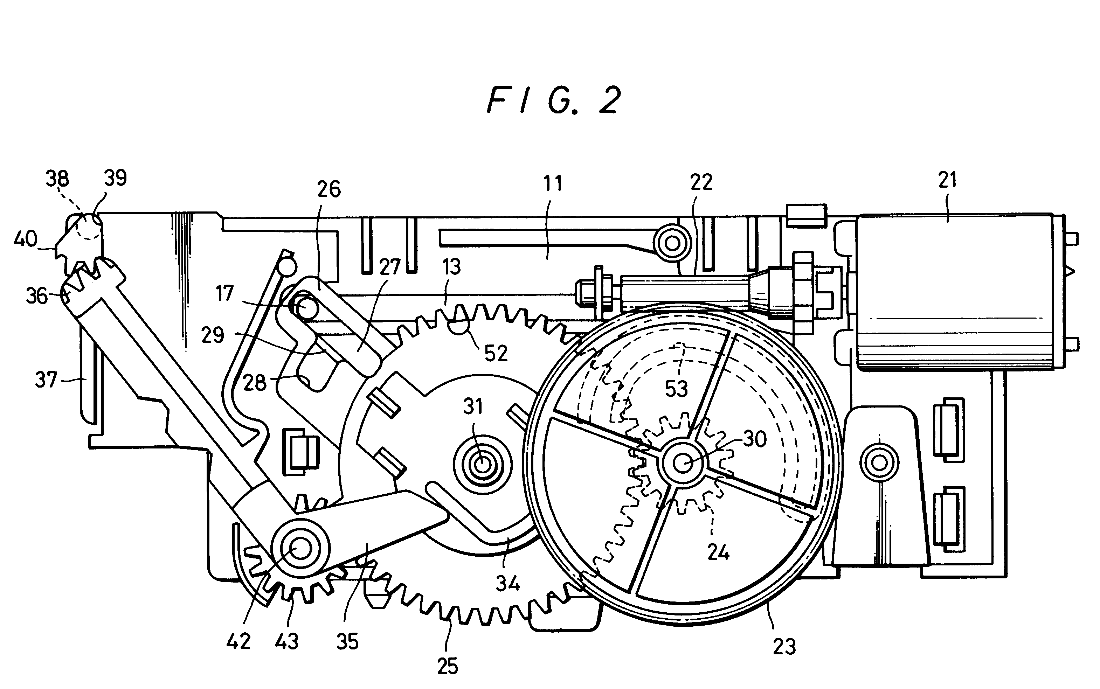

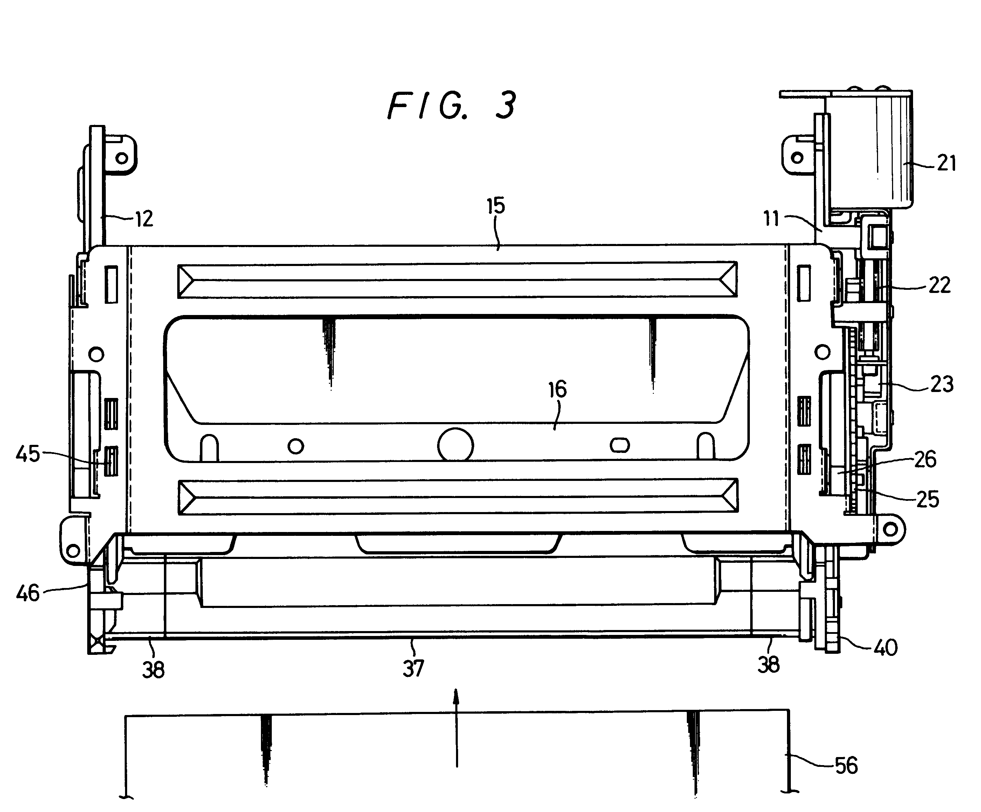

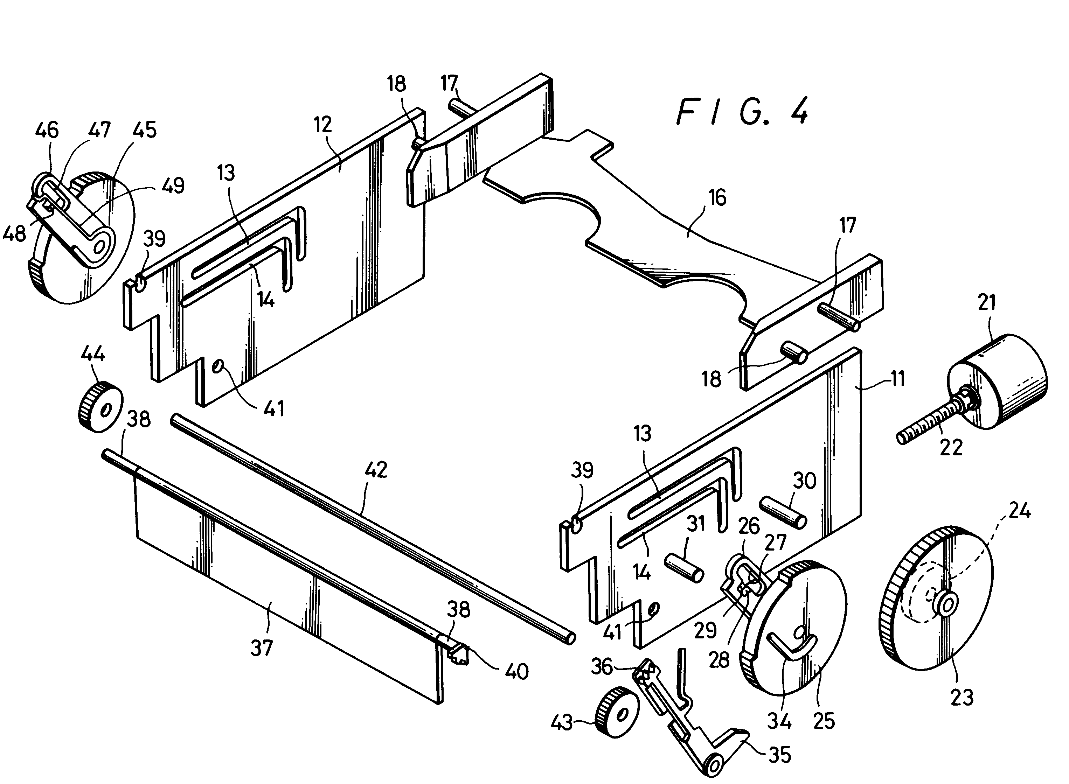

Figures 2 to 4 show a cassette loading apparatus for use with a front-loading VTR. Referring initially to Figure 4, this cassette loading apparatus is provided with right and left frames 11 and 12, respectively. Each of the frames 11 and 12 has formed therethrough L-shaped slots 13 and 14, and the frames 11 and 12 are coupled to each other at the upper portions thereof by means of a coupling plate 15 (Figure 3). A cassette holder 16 is movably mounted between the frames 11 and 12 such that it can be freely shifted. More specifically, two pins 17 and 18 are provided on each side plate of the cassette holder 16 and are slidably movable within the L-shaped grooves 13 and 14.

As shown in Figures 2 to 4, a motor 21 is arranged outside the frame 11, and a worm 22 is formed on the output shaft of the motor 21. The worm 22 is meshed with a worm gear 23, as shown in Figure 2. The worm gear 23 is provided at its centre with a pinion 24 that is meshed with a geneva stop gear 25 whose gear teeth are absent over a segment thereof. The gear 25 is attached to a drive lever 26 that has a rectangular aperture 27 formed therein into which the pin 17 of the cassette holder 16 is inserted. The rectangular aperture 27 communicates with a further recess 28 also formed in the drive lever 26, and a spring 29 is attached to the inside of the drive lever 26 so as normally to keep the pin 17 within the rectangular aperture 27. The worm gear 23 and the gear 25 are rotatably supported by support shafts 30 and 31, respectively, provided on the frame 11.

A cam 34 is formed on the outside of the gear 25 relative to the drive lever 26, and the cam 34 is used to operate an open and close lever 35, which has a toothed portion 36 at one end. A shutter plate 37 is opened and closed by the toothed portion 36. More specifically, as shown in Figure 4, the shutter plate 37 is carried by a support shaft 38, whose ends are supported by cut-outs 39 in the frames 11 and 12, so that the support shaft 38 can be freely rotated. In addition, as shown in Figure 2, a gear segment 40 is secured to one end of the support shaft 38 and arranged to mesh with the toothed portion 36 on the lever 35.

Through-holes 41 are respectively formed through the frames 11 and 12, and a shaft 42 is inserted at both ends into respective through-holes 41. As shown in Figures 2 and 4, a gear 43 is secured to one end of the shaft 42 outside the frame 11, and another gear 44 is attached to the other end of the shaft 42 outside the frame 12. The gear 44 is intended to mesh with a gear 45, which has no gear teeth over a circumferential segment and is arranged outside the frame 12. Rotation of the gear 25 is transmitted to the gear 45 through the gear 43, the shaft 42 and the gear 44 in an opposing direction to that of the gear 25. The gear 45 is also provided with a drive lever 46 that has a rectangular aperture 47 formed therethrough. A recess 48 communicates with the rectangular aperture 47, and a spring 49 is attached to the inside of the drive lever 46 facing the frame 12, as shown in Figure 4 to keep the pin 17 normally in the aperture 47.

Referring to Figure 2, a pin 52 is implanted on the outside flat surface of the gear 25, which also has the drive lever 26 arranged on the inside flat surface thereof. A long cam groove 53 is formed on the inside flat surface of the worm gear 23 such that it extends in a circumferential fashion relative to the worm gear 23. The pin 52 is received by the cam groove 53 and due to the mutual action of the pin 52 and the cam groove 53, the cassette holder 16 can be locked when it is moved to the loading position. This locking action will be explained below.

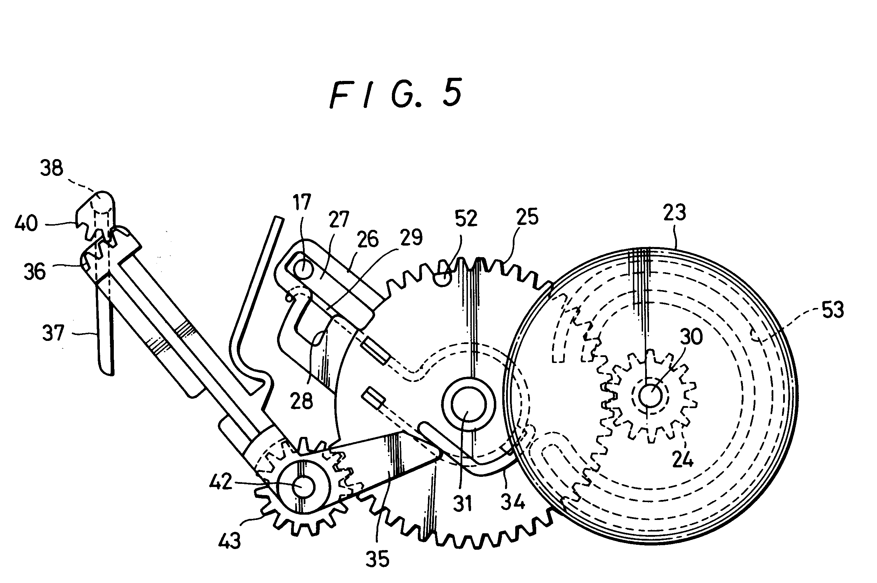

In the above-described arrangement shown in Figure 2, when the motor 21 drives the worm 22 a rotational force is transmitted to the worm gear 23, the pinion 24, the gear 25, and the drive lever 26 in that order. Accordingly, the drive lever 26 is rotated around the support shaft 31 affixed to the frame 11, in the clockwise direction, as shown in Figures 5 to 8. In accordance with such clockwise rotation of the drive lever 26, the pin 17 on the side wall of the cassette holder 16 extends through the slot 13 in the frame 11 and is inserted into the rectangular aperture 27 of the drive lever 26, so that the pins 17 of the cassette holder 16 are moved along the L-shaped slots 13 in the frames 11 and 12 by the drive lever 26. In other words, the pins 17 are moved in a horizontal direction in the initial stage of operation, and when the pins 17 reach a predetermined position, they are moved downwardly in the vertical direction, whereby a tape cassette, shown generally at 56 in Figure 3, that has been inserted into the cassette holder 16 is loaded at a predetermined loading position.

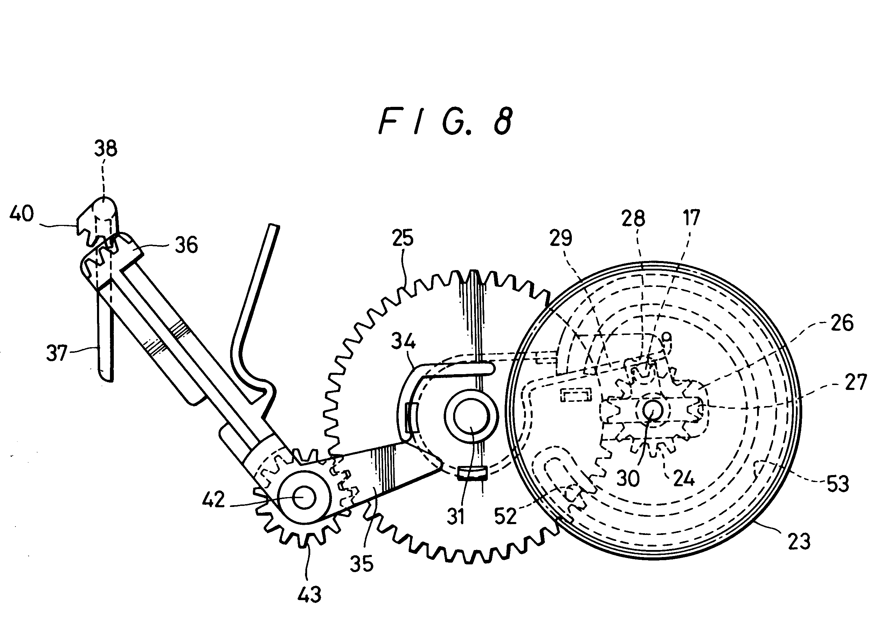

The cassette holder 16 upon being moved to the predetermined loading position is locked by means of the co-operation between the pin 52, the gear 25, and the cam groove 53 on the worm gear 23, as shown in Figure 8.

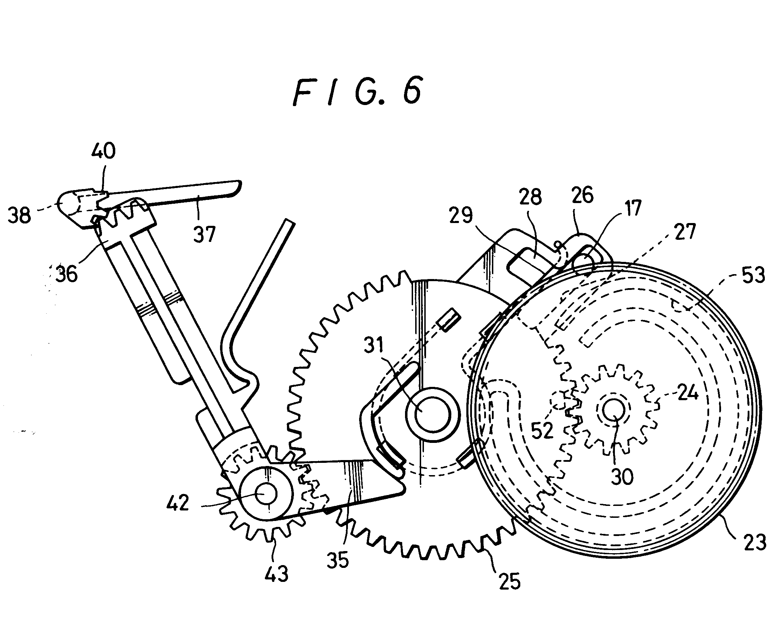

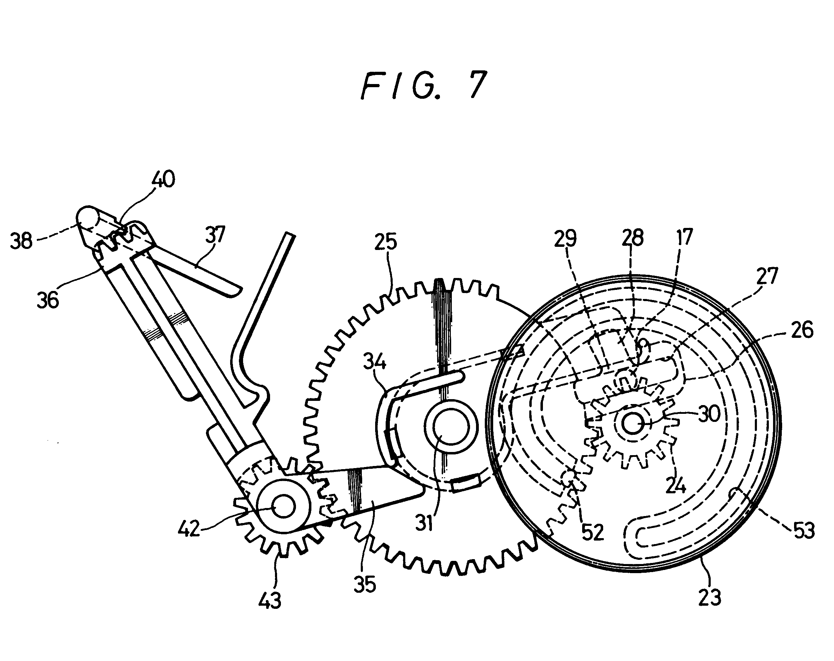

More specifically, in the sequential movement shown in Figures 5 to 8 when the movement of the cassette holder 16 is started, as shown in Figure 5, the pin 52 and the cam groove 53 are not yet in engagement with each other but when the gear 25 is rotated in the clockwise direction by the pinion 24, as shown in Figure 6, the pin 52 is received into the open end of the cam groove 53, as shown in Figure 7. When the cassette holder 16 is completely moved to the loading position, the pin 52 has moved near the end portion of the cam groove 53, as shown in Figure 8, so that the pin 52 is pushed by, or jammed against, the side wall of the cam groove 53, thereby preventing the gear 25 from rotating in the counter-clockwise direction.

More specifically, in this embodiment, the cam groove 53 is provided with a so-called overlap portion such that the gear 25 and the pinion 24 are kept in a meshed condition until the pin 52 is inserted into the cam groove 53. Thus, a phase displacement, or independent rotation of the gears 25 and 24, can be avoided when the tape cassette 56 moves downwardly, which is where a load tends to fluctuate. The overlap portion of the cam groove 53 is formed so as not to change a rotational ratio determined by the gear ratio between the gear 25 and the pinion 24. Therefore, the overlap portion of the cam groove 53 is provided with both inside and outside walls relative to the pin 52.

In this embodiment, the pinion 24 and the gear 25 are meshed with each other and even when the engagement between the gear 25 and the pinion 24 is broken at a point past the interval where the pin 52 is received by the cam groove 53, that is, the overlap interval, the cam groove 53 drives the pin 52 to make the rotational ratio between the pinion 24 and the gear 25 equal to the gear ratio therebetween as determined by the respective gear teeth, whereby rotational fluctuations are removed. Alternatively, so long as the rotational speed does not fluctuate rapidly following the overlap interval, the rotational speed, which completely coincides with the gear ratio, need not be always provided in accordance with the shape of the cam groove 53. Thus, it is possible to provide a substantially equal rotational speed for the pinion 24 and the gear 25 at the same radial distance from their respective centres.

Accordingly, in the overlap interval where the pinion 24 and the gear 25 are again meshed with each other from the locked condition, as shown from the operational positions regressing from Figure 8 to Figure 5, the cam groove 53 and the pin 52 operate as though the pinion 24 and the gear 25 are in engagement with each other. A repulsion occurring in the locking of the cassette holder 16, as shown in Figure 8, appears as a rotational moment of the drive lever 26 and the gear 25 in the counter-clockwise direction. This rotational moment is received by the side wall of the cam groove 53 of the worm gear 23 via the pin 52, so that when the cassette holder 16 is in the locked state, a line connecting the support shaft 31 of the gear 25 and the pin 52, and a line connecting the support shaft 30 of the gear 23 and the pin 52 are perpendicular to each other.

In this embodiment, at least one of a pair of gears meshed with each other in a cassette loading gear train is formed as a geneva stop gear, and one of the pair of gears is provided with a locking member, while the other gear is provided with a cam that is in engagement with the locking member. The length of this cam is increased, so that when the pair of gears are in engagement with each other, the locking member can be restricted by the cam. Moreover, even when the engagement between the pair of gears is broken by the geneva stop gear arrangement, the combination of the cam and the locking member applies a rotational ratio substantially equal to the gear ratio of the pair of gears. Thus, when the cassette holder is moved to the loading position, the locking member comes into contact with the cam, thereby locking the cassette holder against further movement. Therefore, the rotational force can be smoothly changed over from the gear to the cam without phase displacement, that is, independent rotation of the gears, unlike previously proposed cassette loading devices.

Further, even if the tape cassette is loaded by rotating the gear train from the follower side, such as may occur when the power supply is interrupted, the locking member is restricted by the cam when the tape cassette moves downwardly, so that it is possible to prevent tape slackening or the like due, for example, to vibration.

Furthermore, the shape of the cam is coaxially extended after the point where the cassette holder is locked, whereby the drive source can be stopped without requiring high accuracy. Therefore, system control, system design, and accuracy of assembly can be simplified.

## Claims

1. A cassette loading apparatus in which a tape cassette holder (16) is moved by a drive source (21) through a gear train (22 to 25) to locate a tape cassette (56) in a predetermined loading position, the apparatus comprising:
a pair of gears (25; 23,24) arranged in mutual engagement forming a part of the gear train (22 to 25), at least one gear (25) of said pair of gears (25; 23,24) being formed as a geneva stop gear (25);
a locking member (52) attached to one gear (25) of said pair of gears (25; 23,24); and
a cam (53) formed on the other gear (23,24) of said pair of gears (25; 23,24), said cam (53) being arranged for engagement with said locking member (52), wherein when said cassette holder (16) is moved to a loading position, said locking member (52) is jammed against said cam (53), thereby locking the cassette holder (16),
wherein said cam (53) has a predetermined length so that whilst said pair of gears (25; 23,24) are in engagement with each other,said locking member (52) is restricted by said cam (53),
characterised in that whilst said pair of gears (25; 23,24) are disengaged from each other by said geneva stop gear (25), a rotational ratio substantially equal to the gear ratio of said pair of gears is applied to said pair of gears (25; 23,24) by said cam (53) and said locking member (52).

2. Apparatus according to claim 1 wherein the cassette holder (16) is moved by said one gear (25) of said pair of gears (25; 23,24) having said locking member (52).

3. Apparatus according to claim 1 or claim 2 wherein said gear (23,24) having the cam (53) is driven by the drive source (21) through a worm (22).

4. Apparatus according to claim 1, claim 2 or claim 3 wherein said pair of gears (25; 23,24) and said locking member (52) are arranged so that a straight line connecting the rotation centre of said gear (25) having the locking member (52) and the locking member (52), and a straight line connecting a position in which said locking member (52) is held and the rotation centre of said gear (23,24) having the cam (53) are substantially perpendicular to each other at the cassette holder loading position.

5. A cassette loading apparatus as claimed in claim 1, wherein said locking member (52) is attached to a flat, side surface of said one gear (25) of said pair of gears (25; 23,24); and said cam (53) is formed on a flat, side surface of said other gear (23,24) of said pair of gears (25; 23,24).

## Patentansprüche

1. Kassettenladegerät, in welchem ein Kassettenhalter (16) durch einen Antrieb (21) über ein Getriebe (22 bis 25) bewegt wird, um eine Bandkassette (56) in eine festgelegte Ladeposition zu bringen, umfassend:
ein Paar von Antriebsorganen (25;. 23, 24), die in gegenseitigem Eingriff einen Teil eines Getriebes (23 bis 25) bilden, in dem mindestens ein Antriebsorgan (25) dieses Paares (25; 23, 24) mit einer Übersetzungsunterbrechung versehen ist;
ein einem Antriebsorgan (25) des Paares (25; 23, 24) zugeordnetes Sperrglied (52); sowie
eine an dem anderen Antriebsorgan (23, 24) des Paares (25; 23, 24) angeordnete Nockenführung (53), die zum Zusammenwirken mit dem Sperrglied (52) ausgebildet ist, derart, daß das Sperrglied (52) gegen die Nockenführung (53) geklemmt wird und dadurch den Kassettenhalter (16) verriegelt, wenn der Kassettenhalter (16) in die Ladeposition gebracht ist,
worin die besagte Nockenführung (53) eine derartige Länge hat, daß das Sperrglied (52) durch die Nockenführung (53) zwangsgeführt ist, während das Paar von Antriebsorganen (25; 24, 24) ineinander eingreift,
dadurch gekennzeichnet, daß dann, wenn das Paar der Antriebsorgane (25; 23, 24) durch die Übersetzungsunterbrechung außer Eingriff gebracht ist, das Paar der Antriebsorgane (25; 23, 24) durch die Nockenführung (53) und das Sperrglied in einem Drehzahlverhältnis bewegt wird, das im wesentlichen gleich dem Drehzahlverhältnis des in Eingriff stehenden Paares (25; 23,24) ist.

2. Kassettenladegerät nach Anspruch 1, worin der Kassettenhalter durch jenes Antriebsorgan (25) des Paares von Antriebsorganen (25; 23, 24) bewegt wird, welches das Sperrglied (52) trägt.

3. Kassettenladegerät nach Anspruch 1 oder 2, worin das Antriebsorgan (23, 24) mit der Nockenführung (53) von dem Antrieb (21) über eine Schnecke (22) angetrieben wird.

4. Kassettenladegerät nach einem der Ansprüche 1, 2 oder 3, in dem das Paar der Antriebsorgane (25; 23, 24) so angeordnet ist, daß eine Verbindungsgerade zwischen dem Rotationszentrum des mit dem Sperrglied (52) versehenen Antriebsorgans (25) und dem Sperrglied (52) einerseits sowie eine Verbindungsgerade zwischen dem Sperrglied (52) in einer Position, in der das Sperrglied (52) festgehalten wird, und dem Rotationszentrum des Antriebsogans (23, 24) mit der Nockenführung (53) andererseits senkrecht zueinander stehen.

5. Kassettenladegerät nach Anspruch 1, worin das Sperrglied (52) auf einer flachen seitlichen Fläche des einen Antriebsorgans (25) und die Nockenführung auf einer flachen seitlichen Fläche des anderen Antriebsorgans (23, 24) des Paares der Antriebsorgane (25; 23, 24) angeordnet sind.

## Revendications

1. Dispositif de chargement de cassette dans lequel un porte-cassette de bande (16) est mû par une source de force motrice (21) par l'intermédiaire d'un train d'engrenages (22 à 25) pour placer une cassette de bande (56) dans une position de chargement prédéterminée, le dispositif comprenant :
une paire d'engrenages (25 ; 23, 24) agencés en prise mutuelle formant une partie du train d'engrenages (22 à 25), au-moins un engrenage (25) de ladite paire d'engrenages (25 ; 23 ; 24) étant réalisé sous la forme d'un engrenage d'arrêt de Genève (25) ;
un élément de verrouillage (52) fixé à un engrenage (25) de ladite paire d'engrenages (25 ; 23 ; 24) ; et
une came (53) formée sur l'autre engrenage (23, 24) de ladite paire d'engrenages (25 ; 23, 24), ladite came (53) étant agencée pour entrer en prise avec ledit élément de verrouillage (52), dans lequel, lorsque ledit porte-cassette (16) est amené à une position de chargement, ledit élément de verrouillage (52) est bloqué contre ladite came (53), en verrouillant ainsi le porte-cassette (16),
où ladite came (53) a une longueur prédéterminée, de sorte que, pendant que les engrenages de ladite paire d'engrenages (25 ; 23, 24) sont en prise entre eux, ledit élément de verrouillage (52) est arrêté par ladite came (53),
caractérisé en ce que, lorsque les engrenages de ladite paire d'engrenages (25 ; 23, 24) sont dégagés l'un de l'autre par ledit engrenage d'arrêt de Genève (25), un rapport de rotation sensiblement égal au rapport d'engrenage de ladite paire d'engrenages est appliqué à ladite paire d'engrenages (25 ; 23, 24) par ladite came et ledit élément de verrouillage (52).

2. Dispositif selon la revendication 1, dans lequel le porte-cassette (16) est entraîné par ledit premier engrenage (25) de ladite paire d'engrenages (25 ; 23, 24) qui porte ledit élément de verrouillage (52).

3. Dispositif selon la revendication 1 ou la revendication 2, dans lequel ledit engrenage (23, 24) qui porte la came (53) est entraîné par la source de force motrice (21) par l'intermédiaire d'une vis sans fin (22).

4. Dispositif selon la revendication 1, la revendication 2 ou la revendication 3, dans lequel ladite paire d'engrenages (25 ; 23, 24) et ledit élément de verrouillage (52) sont disposés de telle manière qu'une ligne droite qui joint le centre de rotation dudit engrenage (25) portant l'élément de verrouillage (52) à l'élément de verrouillage (52) et une ligne droite qui joint un point où ledit élément de verrouillage (52) est retenu et le centre de rotation dudit engrenage (23, 24) qui porte la came (53) sont sensiblement perpendiculaires entre elles au droit de la position de chargement du porte-cassette.

5. Dispositif de chargement de cassette selon la revendication 1, dans lequel ledit élément de verrouillage (52) est attaché à une surface latérale plate dudit premier engrenage (25) de ladite paire d'engrenages (25 ; 23, 24) ; et
ladite came (53) est formée sur une surface latérale plate dudit autre engrenage (23, 24) de ladite paire d'engrenages (25 ; 23, 24).
